# DEMANDE DE BREVET EUROPEEN

(11) **EP 0 846 735 A1**
(43) Date de publication de la demande: **10.06.1998**
(21) Numéro de dépôt: 97402917.5
(22) Date de dépôt: 03.12.1997
(51) Int. Cl.: C09D 9/00

(54) **Compositions aqueuses pour le décapage de peintures et primaires à haut degré de réticulation**

(30) Priorité: 06.12.1996 FR 9615041
(71) Demandeur: ELF ATOCHEM S.A., 92800 Puteaux, Hauts-de-Seine (FR)
(72) Inventeur: Lallier, Jean-Pierre, 92400 Courbevoie (FR)
(74) Mandataire: Chaillot, Geneviève

(57) **Abrégé**

Cette composition décapante pour peintures recouvrant un substrat, en particulier pour le décapage de peintures et primaires à haut degré de réticulation, notamment de type époxy, polyuréthanne et alkyde, est caractérisée par le fait qu'elle est constituée par ou qu'elle comprend : (A) 50 à 80 parties en poids d'eau ; (B) 20 à 50 parties en poids de benzaldéhyde et/ou d'alcool benzylique ; (C) 5 à 15 parties en poids d'au moins un activateur choisi parmi l'acide formique, l'acide formique totalement ou partiellement neutralisé par une base, et les bases ; et (D) 0,5 à 10 parties en poids d'au moins un épaississant, ledit épaississant étant nécessairement un épaississant de nature acrylique dans le cas où (B) est uniquement constitué par de l'alcool benzylique, (A) + (B) représentant 100 parties en poids.

## Description

La présente invention porte sur une composition aqueuse pour le décapage de primaires et peintures à haut degré de réticulation, par exemple les peintures et primaires aéronautiques, notamment de type époxy, polyuréthanne et alkyde.

Les peintures et primaires aéronautiques font partie des peintures les plus difficiles à décaper. Le décapage d'un avion se fait tous les 5 ou 10 ans pour des raisons esthétiques, mais également pour mettre en évidence les failles possibles dans la carlingue de l'avion. Les peintures aéronautiques sont souvent des peintures bi-composants hautement réticulées. Les vols à haute altitude amplifient cette réticulation initiale par les U.V. émis par le soleil. On obtient alors des zones plus réticulées que d'autres suivant leur degré d'exposition aux U.V. Il est habituel, pour ces zones, de rajouter du décapant et de le laisser agir plus longtemps. Le décapage d'un avion se fait par aspersion d'un décapant épaissi qui ne doit pas couler sur parois verticales.

On laisse le décapant agir un certain temps (rarement en-dessous d'une heure dans le cas du décapage aéronautique), puis on rince au jet d'eau sous pression. Les écailles et lambeaux de peinture sont alors entraînés par l'eau au travers d'une grille dans une fosse container. Après décantation dans la fosse container, les boues sont incinérées et la phase liquide est distillée.

Pour des raisons d'environnement et de toxicité, on cherche à l'heure actuelle à remplacer les décapants aéronautiques à base de chlorure de méthylène et/ou de phénol (Ind. Finish. 45(10) 1969, 28-31). Ces deux composés se sont avérés très efficaces pour le décapage aéronautique, surtout en présence d'un activateur acide ou alcalin, mais ils sont polluants pour l'environnement. Pour décaper les peintures et primaires aéronautiques (polyuréthannes, époxy, alkydes), il est nécessaire d'utiliser une base solvant très efficace. Le développement de formulations aqueuses contenant une partie de solvants est particulièrement intéressant pour limiter les problèmes de toxicité et d'environnement. On cherchera donc à incorporer le plus d'eau possible dans les formulations et à limiter les teneurs en produits toxiques.

Pour cette application, il a déjà été développé des formulations efficaces à base d'alcool benzylique. Il s'agit en fait d'émulsions eau-alcool benzylique activées par un acide ou une base. Le brevet américain US-A-5 405 548 décrit un mélange à base d'alcool benzylique, d'eau et d'acide formique pour le décapage aéronautique. Selon les auteurs, l'efficacité de leur décapant est dû à l'ester "formiate de benzyle" formé in situ lors de la mise en formulation, c'est-à-dire lors du mélange entre l'alcool benzylique et l'acide formique. Le formiate de benzyle serait la molécule active et, en raison de son coût, il est beaucoup plus intéressant de le synthétiser durant l'opération de formulation que de l'introduire comme constituant.

La Société déposante a cherché à mettre au point d'autres compositions décapantes pour peintures du type précité supérieures aux compositions connues du point du vue des performances et/ou du point de vue de la forte teneur en eau. Il a, entre autres, été montré qu'une formulation décapante aéronautique ne devait pas contenir obligatoirement du formiate de benzyle pour être efficace.

Les compositions qui ont ainsi été mises au point et qui sont donc conformes à la présente invention, sont caractérisées par le fait qu'elles sont constituées par ou qu'elles comprennent :
(A) 50 à 80 parties en poids d'eau ;
(B) 20 à 50 parties en poids de benzaldéhyde et/ou d'alcool benzylique ;
(C) 5 à 15 parties en poids d'au moins un activateur choisi parmi l'acide formique, l'acide formique totalement ou partiellement neutralisé par une base, et les bases ; et
(D) 0,5 à 10 parties en poids d'au moins un épaississant, ledit épaississant étant nécessairement un épaississant de nature acrylique dans le cas où (B) est uniquement constitué par de l'alcool benzylique,
(A) + (B) représentant 100 parties en poids.

Les bases pouvant entrer dans la composition de (C) sont notamment choisies parmi l'éthanolamine, la triéthanolamine, l'ammoniaque, l'éthylènediamine, le carbonate d'ammonium et le pyrrole.

Le ou les épaississants (D) sont choisis notamment parmi les épaississants acryliques et les épaississants cellulosiques tels que l'hydroxyéthyl cellulose et l'hydroxypropyl méthyl cellulose, et la gomme de xanthane. Comme exemple particulier d'épaississant cellulosique, on peut citer le METHOCELL 311, commercialisé par la Société DOW CHEMICAL Co, dont le procédé d'obtention est décrit dans le brevet américain US-A-3 388 082 intitulé "Hydroxypropyl methyl cellulose ethers". Comme exemple particulier d'épaississant acrylique, on peut citer la résine acrylique commercialisée sous la dénomination "CARBOPOL" par la Société GOODRICH, BF, Co, dont le procédé d'obtention est décrit dans le brevet américain US-A-4 419 502 intitulé "Polymerization process for carboxyl-containing polymers". En particulier, il a été montré que, de façon tout à fait inattendue, en présence d'un épaississant acrylique à la place d'un épaississant cellulosique, on pouvait obtenir des compositions ayant une teneur en eau plus élevée et/ou au moins aussi efficaces (cf Ex 5 et 13 du Tableau 1). L'épaississement par un dérivé cellulosique nécessite l'utilisation de tensio-actifs qui stabilisent l'émulsion et la rendent moins active. D'une manière générale, plus une émulsion est instable, plus elle sera active dans l'application visée. Ainsi, conformément à un mode de réalisation particulier de la présente invention, la composition décapante comporte un épaississant (D) acrylique et est exempte d'agent tensio-actif.

La composition selon la présente invention peut en outre contenir :
- au moins un inhibiteur de corrosion choisi notamment parmi le benzoate de sodium, la monoéthanolamine, la triéthanolamine et l'acide citrique, par exemple à raison de 0,1 à 10 parties en poids pour 100 parties en poids de (A) + (B) (la monoéthanolamine et la triéthanolamine ont également le rôle d'activateur (C)) ;
- au moins un retardateur d'évaporation, tel que la paraffine, par exemple à raison de 0,1 à 10 parties en poids de (A) + (B).

Les Exemples suivants illustrent la présente invention sans toutefois en limiter la portée.

### EXEMPLES 1 à 13

On a préparé chacune des compositions décapantes en mélangeant à la température ambiante les constituants tels qu'indiqués dans le Tableau 1 ci-après

On dépose chaque composition sur un substrat en aluminium revêtu de la peinture que l'on veut décaper. Les peintures testées, au nombre de quatre, telles que définies également dans le Tableau 1, ont été appliquées au préalables sur un substrat d'aluminium et séchées.

On mesure le temps d'apparition de soulèvement de la peinture, lequel se fait d'un seul coup et produit même un bruit caractéristique.

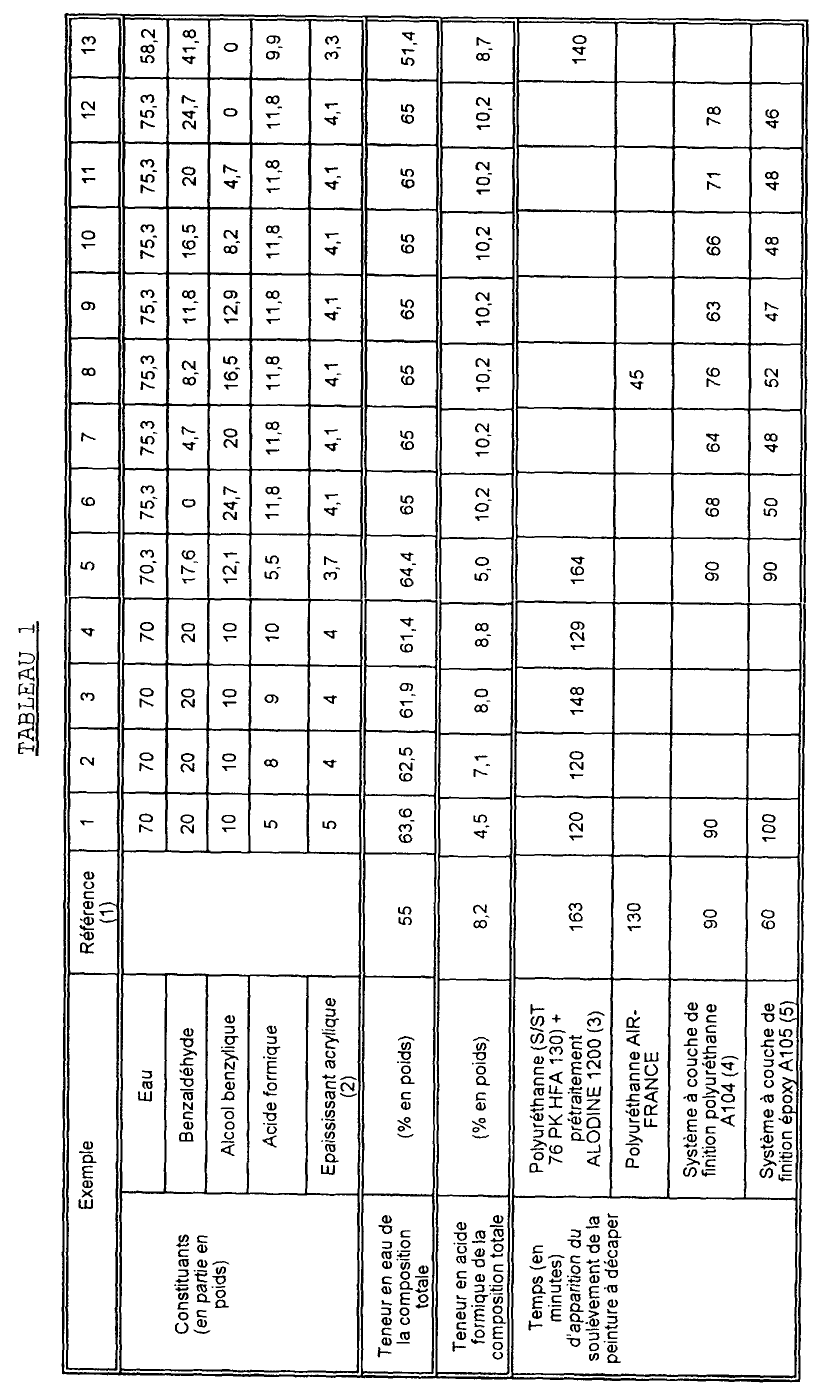

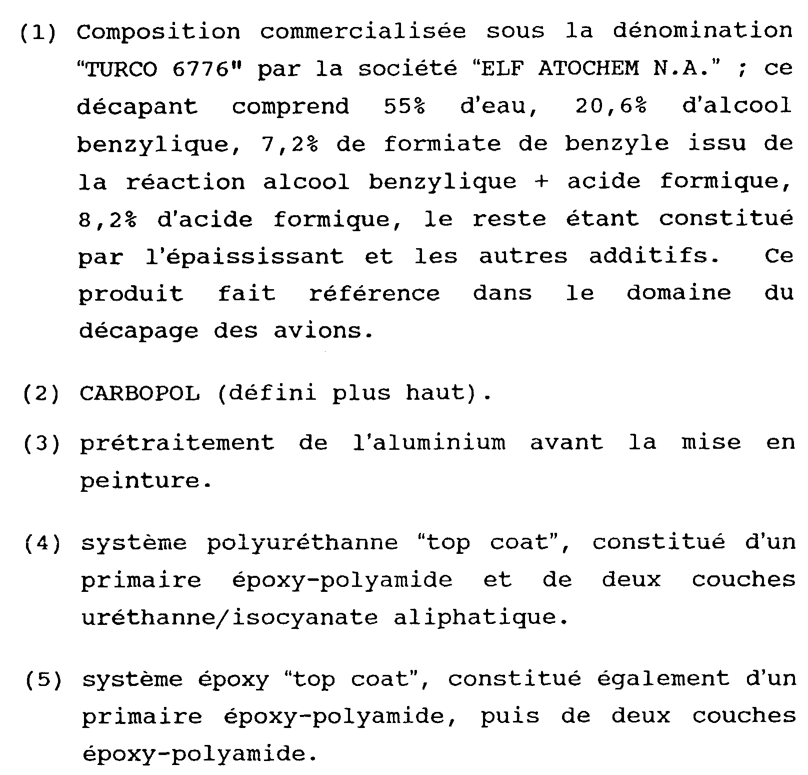

Les formulations des Exemples 12 et 13 montrent que la présence d'alcool benzylique n'est pas nécessaire pour l'obtention d'une bonne efficacité. Il a été vérifié, par RMN¹H, dans le cas de la formulation de l'Exemple 12, l'absence de formation de formiate de benzyle, lequel se forme normalement à partir de l'estérification de l'alcool benzylique avec l'acide formique.

### EXEMPLES 14 à 16

On a préparé des compositions identiques à celle de l'Exemple 7, excepté que l'on a ajouté de la triéthanolamine dans une quantité telle que l'acide formique + la triéthanolamine représentent 11,8 parties en poids, les rapports molaires acide formique/triéthanolamine étant de respectivement 3 (Exemple 14) ; 1,5 (Exemple 15) et 1 (Exemple 16). La teneur en eau de la composition totale est de 65% en poids.

Les temps (en minutes) d'apparition du soulèvement de la peinture à décaper sur les systèmes à couches de finition A104 et A 105 définis dans le Tableau 1 sont rapportés dans le Tableau 2. Ces temps restent inférieurs à ceux obtenus avec les formulations alcalines du commerce TURCO 6813 E et TURCO 6840 S, qui sont supérieurs à 480 minutes.

**TABLEAU 2**

| EXEMPLE | 14 | 15 | 16 |
|---|---|---|---|
| Système à couche de finition polyuréthanne A104 | 135 | 88-96 | 200-300 |
| Système à couche de finition époxy A105 | 112 | 271-420 | 425-(>480) |

### EXEMPLES 17 à 20

On a préparé les compositions suivantes (constituants et leurs quantités en parties en poids) :

**TABLEAU 3**

| EXEMPLE | 17 | 18 | 19 | 20 |
|---|---|---|---|---|
| Eau | 75,3 | 75,3 | 70,3 | 75,3 |
| Benzaldéhyde | 8,2 | 8,2 | 9,9 | 0 |
| Alcool benzylique | 16,5 | 16,5 | 19,8 | 24,7 |
| Epaississant acrylique (2) | 0,6 | 1,03 | 1,6 | 0,8 |
| NH₃ (solution aqueuse à 28% en poids) | 11,8 | | | |
| H₂NCH₂CH₂NH₂ | | 11,8 | | |
| (NH₄)₂CO₃ | | | 6,04 | |
| Pyrrole | | | | 5,9 |
| Teneur totale en eau (% en poids | 67 | 66,7 | 65,3 | 70,6 |

Le temps d'apparition du soulèvement de la peinture est supérieur à 480 minutes et du même ordre que ceux obtenus avec les formulations alcalines du commerce TURCO 6813 E et 6840 S. On constate par ailleurs que l'épaississant acrylique se trouve à une teneur plus faible, par suite de la réactivité des groupes carboxyliques de la résine acrylique, ce qui entraîne un pouvoir épaississant beaucoup plus important (rupture des liaisons H, dépelotage).

## Revendications

1. Composition décapante pour peintures recouvrant un substrat, en particulier pour le décapage de peintures et primaires à haut degré de réticulation, notamment de type époxy, polyuréthanne et alkyde, caractérisée par le fait qu'elle est constituée par ou qu'elle comprend :
(A) 50 à 80 parties en poids d'eau ;
(B) 20 à 50 parties en poids de benzaldéhyde et/ou d'alcool benzylique ;
(C) 5 à 15 parties en poids d'au moins un activateur choisi parmi l'acide formique, l'acide formique totalement ou partiellement neutralisé par une base, et les bases ; et
(D) 0,5 à 10 parties en poids d'au moins un épaississant, ledit épaississant étant nécessairement un épaississant de nature acrylique dans le cas où (B) est uniquement constitué par de l'alcool benzylique,
(A) + (B) représentant 100 parties en poids.

2. Composition décapante selon la revendication 1, caractérisée par le fait que les bases sont choisies parmi l'éthanolamine, la triéthanolamine, l'ammoniaque, l'éthylènediamine, le carbonate d'ammonium et le pyrrole.

3. Composition décapante selon l'une des revendications 1 et 2, caractérisée par le fait que le ou les épaississants (D) sont choisis parmi les épaississants acryliques et les épaississants cellulosiques tels que l'hydroxyéthyl cellulose et l'hydroxypropyl méthyl cellulose, et la gomme de xanthane.

4. Composition décapante selon l'une des revendications 1 à 3, caractérisée par le fait qu'elle comporte un épaississant (D) acrylique et qu'elle est exempte d'agent tensio-actif.

5. Composition décapante selon l'une des revendications 1 à 4, caractérisée par le fait qu'elle contient en outre au moins un inhibiteur de corrosion choisi notamment parmi le benzoate de sodium, la monoéthanolamine, la triéthanolamine et l'acide citrique, à raison de 0,1 à 10 parties en poids pour 100 parties en poids de (A) + (B).

6. Composition décapante selon l'une des revendications 1 à 5, caractérisée par le fait qu'elle contient en outre au moins un retardateur d'évaporation, tel que la paraffine, à raison de 0,1 à 10 parties en poids de (A) + (B).
